# FASCICULE DE BREVET EUROPEEN

(11) **EP 3 129 658 B1**
(45) Date de publication et mention de la délivrance du brevet: **28.02.2018**
(21) Numéro de dépôt: 15720369.6
(22) Date de dépôt: 08.04.2015
(51) Int. Cl.: F04D 29/44, F04D 29/62, F04D 1/06

(54) **DISPOSITIF DE TRANSFERT DE FLUIDE ET PROCEDE DE FABRICATION DE CELUI-CI**
FLUIDTRANSFERVORRICHTUNG UND VERFAHREN ZUR HERSTELLUNG DAVON
FLUID-TRANSFER DEVICE AND METHOD FOR MANUFACTURING SAME

(30) Priorité: 10.04.2014 FR 1453193
(43) Date de publication de la demande: 15.02.2017
(73) Titulaire: ArianeGroup SAS, 75015 Paris (FR)
(72) Inventeur: BOUFFLERT, Sébastien, 27400 Louviers (FR); BOURDIN, Philippe, 27950 Saint-Just (FR); TESSIER, Fabien, 27200 Vernon (FR); LANGLOIS, Vincent, 71100 Chalon-sur-Saône (FR)
(74) Mandataire: Duflos, Bertrand Guillaume
(86) Numéro de dépôt international: PCT/FR2015/050916
(87) Numéro de publication internationale: WO 2015/155475

(56) Documents cités:
- FR-A1- 2 772 843
- US-A- 3 420 435

## Description

L'invention concerne un dispositif de transfert de fluide comprenant un rotor comportant au moins une première et une deuxième roue centrifuge, et un stator incorporant une pluralité de canaux de retour ; dispositif dans lequel les canaux de retour sont axisymétriques, et chaque canal de retour comporte successivement, en suivant la trajectoire du fluide à partir de la première roue :
- une partie diffusante apte à guider le flux de fluide dans une direction d'écoulement centrifuge, puis
- une partie coudée apte à rediriger le flux de fluide dans une direction d'écoulement centripète, puis
- une partie de retour apte à guider le fluide suivant une trajectoire centripète, et généralement de forme sensiblement droite, puis
- une partie de sortie formée dans une pièce non-tubulaire et apte à guider le fluide vers l'entrée de la deuxième roue centrifuge.

Par roue centrifuge, on désigne une roue à aubes, dont les aubes sont agencées de manière à créer une augmentation de pression entre l'entrée et la sortie de la roue, lorsque la roue est entraînée en rotation à vitesse élevée et qu'elle est alimentée en fluide. L'entrée de la roue désigne ici l'ensemble des orifices d'admission de la roue, par lesquels le fluide pénètre entre les aubes de la roue ; la sortie de la roue désigne l'ensemble des orifices de refoulement de la roue.

Dans les canaux de retour, la partie diffusante est la partie amont du canal, qui guide le fluide dans une direction qui, en projection dans un plan de coupe passant par l'axe de rotation, est sensiblement radiale. La partie coudée est la partie comportant un coude, qui permet de rediriger le flux de fluide d'une direction centrifuge à une direction centripète. Par direction d'écoulement centripète (ou respectivement centrifuge), on désigne ici une direction d'écoulement du fluide qui conduit le fluide à se rapprocher (ou respectivement à s'écarter) de l'axe de rotation du rotor, cette direction pouvant être perpendiculaire ou encore oblique par rapport à l'axe de rotation.

La partie de retour est une partie du canal de retour, généralement de forme sensiblement droite, dans laquelle le flux de fluide est guidé suivant une trajectoire centripète depuis la partie coudée jusqu'à la partie de sortie des canaux. Le terme 'trajectoire centripète' désigne ici une trajectoire du fluide qui rapproche celui-ci de l'axe du rotor.

La partie de sortie est la partie aval du canal, qui dirige le flux de fluide de manière à permettre son entrée dans la deuxième roue avec une perte de charge minimisée et une direction de déplacement du fluide optimisée pour son injection dans l'entrée de la deuxième roue.

Par canaux axisymétriques on désigne des canaux de formes identiques qui se déduisent les uns des autres par une rotation autour de l'axe du dispositif.

Un tel dispositif est divulgué par exemple par la demande de brevet français n°FR 2772 843.

L'invention concerne en particulier ceux de ces dispositifs qui sont utilisés dans des turbomachines pour moteurs fusées cryotechniques, la turbomachine constituant alors une turbopompe servant à alimenter le moteur en hydrogène liquide ou autre.

Les canaux de retour captent ou collectent l'écoulement de fluide sortant à grande vitesse de la première roue pour le redresser, le ralentir et l'amener en entrée de la deuxième roue. Ces canaux de retour constituent ainsi un des éléments principaux de l'architecture de la turbomachine (pompe centrifuge ou compresseur centrifuge). Leur agencement conditionne l'encombrement radial et axial de cette turbomachine.

Les canaux de retour présentent des surfaces tridimensionnelles complexes. Leur forme doit être soigneusement conçue afin de minimiser les pertes de charge, et cela avec un encombrement axial et radial le plus faible possible. Cependant, les contraintes des différents procédés de fabrication rendent parfois difficile, si ce n'est impossible, l'obtention de certaines formes pour les canaux de retour.

Il s'ensuit que souvent la géométrie des canaux de retour n'est pas optimisée, ce qui entraîne une moindre efficacité du dispositif de transfert.

Dans un mode de réalisation connu en soi, les canaux de retours sont continus : c'est-à-dire que chacun des canaux de retour collecte une partie d'un flux de fluide sortant d'une roue en amont et dirige ce flux de fluide collecté jusqu'à une entrée d'une roue aval, et cela sans échanger du fluide avec les autres canaux de retour.

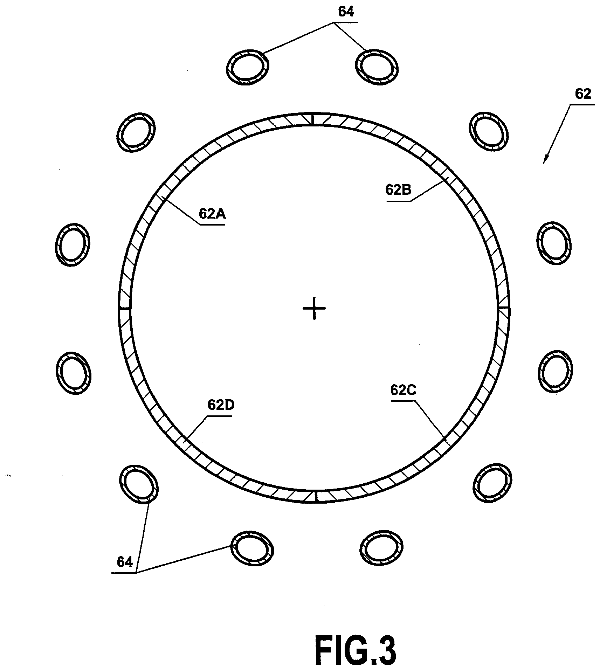

Cependant, les difficultés de réalisation de canaux de retour continus dans une pièce unique s'étendant sur 360° autour de l'axe de rotation du rotor, ont ainsi pu conduire à envisager, pour permettre la réalisation de la pièce, des canaux de retour discontinus, tels que ceux présentés sur la figure 3 du document précédemment cité.

Dans le mode de réalisation présenté par cette figure, les conduits faisant la liaison entre la sortie de la première roue centrifuge et l'entrée de la seconde roue centrifuge sont formés en trois parties : un diffuseur radial aubé, un coude de retournement non aubé puis un redresseur centripète formé d'aubes de retour. Outre le fait que cette solution requiert un grand diffuseur radial pour limiter les pertes de performance, les pertes provoquées par le changement de section en sortie du diffuseur radial, puis celles induites par le coude de retournement et par l'incidence sur le redresseur sont difficilement maîtrisables. Ce concept de canaux de retour ne s'avère donc pas optimal, tant du point de vue de l'encombrement radial que de celui de la performance.

Ce problème de performance a également été constaté avec des canaux de retour réalisés sous forme de canaux continus 'ouverts'. Par canaux continus 'ouverts', on désigne des canaux continus obtenus en joignant au moins deux coques externes sur une pièce dite interne dans laquelle les canaux sont réalisés à l'avance (les canaux s'étendant dans ce cas de la sortie de la première roue jusqu'à l'entrée de la deuxième roue). Du fait des discontinuités liées à l'assemblage, ces canaux présentaient une performance relativement médiocre, susceptible en outre de se dégrader très nettement en cas de jeu entre les coques externes et la pièce interne.

Aussi, un premier objectif de l'invention est de proposer un dispositif de transfert de fluide du type présenté en introduction, présentant des canaux de retour de forme optimisée, et par suite un rendement amélioré par rapport aux dispositifs connus.

Un deuxième objectif est de proposer un dispositif de transfert de fluide dont la fabrication reste relativement simple.

Ces objectifs sont atteints grâce au fait que chacun desdits canaux de retour est apte à collecter une partie d'un flux de fluide sortant de la première roue et à diriger cette partie de flux jusqu'à une entrée de la deuxième roue sans échanger du fluide avec au moins un autre desdits canaux de retour ; et que pour chacun des canaux, la partie diffusante et la partie coudée sont formées dans des pièces distinctes, et la partie diffusante est formée dans une deuxième pièce non-tubulaire, solidaire de la première pièce non-tubulaire dans laquelle est formée la partie de sortie précédemment citée.

Par suite, comme pour chaque canal de retour, la partie diffusante et la partie coudée sont réalisées dans des pièces distinctes, avantageusement l'invention permet d'utiliser des procédés différents pour réaliser les pièces contenant ces deux parties des canaux de retour.

Ces deux parties des canaux de retour présentent en effet des contraintes assez différentes : La partie diffusante est celle dans laquelle la vitesse d'écoulement du fluide est la plus élevée. Il convient donc de favoriser un état de surface optimal, limitant les turbulences. Comme la partie diffusante a une direction sensiblement radiale en projection dans un plan passant par l'axe de rotation, sa forme reste relativement simple, ce qui permet d'envisager de nombreux procédés, notamment des procédés précis et fournissant des pièces ayant un bon état de surface, comme par exemple l'usinage et l'électro-érosion.

Inversement, la partie coudée se caractérise par sa forme complexe, la présence d'un coude entraînant des contraintes de fabrication importantes. Le procédé de fabrication de la ou des pièces comprenant la partie coudée peut être spécialement sélectionné pour être adapté à la réalisation de cette forme.

Enfin, dans le dispositif selon l'invention, l'agencement des canaux au sein de plusieurs pièces, et l'utilisation de tubes (lorsque ce mode de réalisation est choisi) facilitent les inspections et le contrôle de la qualité des canaux lors de la fabrication.

Le fait que la première et la deuxième pièce non-tubulaire soient solidaires l'une de l'autre signifie qu'elles sont rigidement liées l'une à l'autre.

Dans ce but et pour simplifier le dispositif de transfert de fluide, dans un mode de réalisation pour chacun des canaux de retour la partie diffusante et la partie de sortie sont formées dans une seule et même pièce non-tubulaire.

On qualifie ici de pièce non-tubulaire, une pièce dans laquelle est formé un passage et dans laquelle différentes parties du passage présentent des épaisseurs de paroi différentes.

Inversement, on qualifie ici de tube ou pièce tubulaire, une pièce dans laquelle est formé un passage et dans laquelle les parois du passage présentent une épaisseur sensiblement constante au moins sur la plus grande partie de la pièce.

Les pièces non-tubulaires présentent généralement une résistance mécanique élevée (du fait le cas d'échéant d'épaisseurs relativement élevées) ce qui permet de les utiliser avantageusement pour réaliser des pièces de structure de la turbomachine, c'est-à-dire des pièces contribuant à la résistance mécanique d'ensemble de la turbomachine.

En général, les pièces non-tubulaires sont formées par ajout ou enlèvement de matière (par exemple, par frittage de poudre, ou par fonderie suivie d'un usinage). Une pièce tubulaire peut aussi éventuellement être formée par de tels procédés, mais peut aussi être formée par d'autres procédés comme par exemple l'extrusion et l'hydroformage.

La réalisation de la partie diffusante et de la partie de sortie dans des pièces non-tubulaires permet d'optimiser la forme de ces parties des canaux et donc d'optimiser à la fois la captation et le ralentissement du fluide sortant de la première roue centrifuge, et le guidage du fluide vers la deuxième roue centrifuge.

Comme la partie de sortie est formée dans une pièce non tubulaire, son raccordement avec la partie de retour est facilité, notamment lorsque cette dernière est tubulaire ; en outre, la première pièce non-tubulaire peut avoir exactement la forme adaptée pour assurer une alimentation optimale de la deuxième roue.

De surcroît, la réalisation de la partie diffusante et de la partie de sortie dans des pièces non-tubulaires solidaires l'une de l'autre permet d'agencer celles-ci de telle sorte qu'elles puissent assurer l'intégrité mécanique du canal de retour qu'elles délimitent.

Inversement, le reste des canaux de retour peut être formé dans des tubes.

Ainsi dans un mode de réalisation, pour chacun des canaux de retour, la partie coudée et/ou la partie de retour de chacun des canaux est ou sont formée(s) dans un ou plusieurs tubes. La réalisation de ces parties des canaux de retour au moyen de tube(s) est une solution peu coûteuse, permettant de réaliser un dispositif ayant un encombrement et une masse totale réduits, ainsi que de bonnes performances hydrauliques. De plus, le contrôle de qualité du ou des tubes formant la partie coudée des canaux est particulièrement simple. La partie coudée peut être réalisée dans un tube unique, ou encore dans un ensemble de tubes assemblés bout-à-bout.

Avantageusement, la réalisation de la partie coudée au moyen d'un ou plusieurs tubes permet que cette partie présente un état de surface très lisse, préférable pour assurer une très faible perte de charge dans cette partie du canal de retour.

Le ou les tubes dans le(s)quel(s) sont formées la partie coudée et/ou la partie de retour peuvent notamment être de section circulaire, ovale, elliptique, ou autre, notamment en entrée et/ou en sortie, pour satisfaire aux contraintes hydrauliques. Au moins un de ces tubes peut être à paroi mince, c'est-à-dire avoir des parois dont l'épaisseur est inférieure à 10% du diamètre intérieur du tube.

En outre, les différents perfectionnements suivants peuvent être apportés à l'invention, séparément ou en combinaison.

Pour chacun des canaux de retour :
- La partie coudée et la partie de retour peuvent être formées dans une seule et même pièce tubulaire ;
- La partie de retour peut être formée dans une pièce non-tubulaire, dite troisième pièce non-tubulaire ; et éventuellement,
- Cette troisième pièce tubulaire peut être la première pièce non-tubulaire (C'est-à-dire que ces deux pièces non-tubulaires ne sont qu'une seule et même pièce).

Avantageusement, former la partie de retour dans une pièce non-tubulaire facilite l'intégration mécanique des canaux de retour et permet d'assurer plus facilement l'intégrité structurale de ces canaux.

Plus généralement, une pièce non-tubulaire peut être utilisée pour former les canaux de retour, en association avec des pièces tubulaires, de la manière suivante :
Dans un mode de réalisation, chacun des canaux comporte deux portions tubulaires formées dans des pièces tubulaires, et une quatrième pièce non-tubulaire est interposée entre les portions tubulaires. Les portions tubulaires peuvent notamment être formées dans la partie coudée et/ou de retour. La quatrième pièce non-tubulaire permet d'améliorer la résistance mécanique du dispositif en assurant la jonction entre les portions tubulaires.

Dans un mode de réalisation, pour chacun desdits canaux, la quatrième pièce non-tubulaire et ladite première pièce non-tubulaire sont formées dans une seule et même pièce non-tubulaire.

Les différentes propriétés de la partie diffusante, de la partie coudée, de la partie de retour et de la partie de sortie ont été précisées pour l'instant respectivement pour chacun des canaux, et cela indépendamment des autres canaux.

Cela étant, il est préférable naturellement de réaliser de manière groupée les pièces non-tubulaires respectives de plusieurs canaux de retour, de manière à regrouper au sein d'une pièce unique les pièces non-tubulaires respectives de plusieurs canaux de retour.

Cela peut être fait pour les différentes pièces non-tubulaires envisagées précédemment, à savoir les premières et/ou deuxièmes et/ou troisièmes et/ou quatrièmes pièces non-tubulaires (Etant noté que par ailleurs, deux ou trois ou quatre pièces quelconques parmi les première, deuxième, troisième et quatrième pièces non-tubulaires peuvent éventuellement être formées intégralement et ne former qu'une et même pièce).

Ainsi dans un mode de réalisation, la réunion des premières pièces non-tubulaires et/ou la réunion des deuxièmes pièces non-tubulaires et/ou la réunion des troisièmes pièces non-tubulaires et/ou la réunion des quatrièmes pièces non-tubulaires constitue un ensemble d'une ou plusieurs pièces non tubulaires formant un premier corps axisymétrique s'étendant sur 360° autour de l'axe (A) du dispositif.

(Dans la phrase précédente, les premières, deuxièmes, troisièmes et quatrièmes pièces non-tubulaires sont indiquées au pluriel pour simplifier mais le mode de réalisation envisagé inclut le cas où toutes les premières, deuxièmes, troisièmes et/ou quatrièmes pièces non-tubulaires contribuant à former l'ensemble des canaux de retour sont formées intégralement de telle sorte qu'une pièce unique constitue la première, deuxième, troisième et/ou quatrième pièce non-tubulaire pour l'ensemble des canaux de retour).

Par exemple, dans un mode de réalisation la partie diffusante et/ou la partie de retour dans le cas où cette dernière est non tubulaire peuvent être formées dans des pièces dites respectivement de diffusion et de retour, dont la réunion forme un corps s'étendant sur 360° autour d'un axe du dispositif. Les pièces de diffusion et/ou de retour réalisées sous la forme indiquée précédemment constituent des pièces de structure du dispositif. Inversement, les parties coudées des canaux de retour entre la partie diffusante et la partie de retour n'ont pas nécessairement de fonction structurale au sein de la machine et peuvent être constituées par des tubes. Ce mode de réalisation confère au dispositif une résistance mécanique élevée et facilite le montage.

Plus généralement, l'invention concerne également une turbomachine, par exemple une turbopompe, comportant au moins un dispositif de transfert de fluide tel que défini précédemment.

Par ailleurs, un second objectif de l'invention est de définir un procédé de fabrication d'un dispositif de transfert de fluide tel que défini précédemment, permettant la réalisation de canaux de retour de forme optimisée, le dispositif présentant par suite un rendement amélioré par rapport aux dispositifs connus.

Pour réaliser le dispositif, on forme les parties diffusantes par l'une quelconque des technologies suivantes :
- l'usinage (Le terme usinage désigne ici seulement l'usinage mécanique) ;
- l'électro-érosion, à partir d'une ébauche de forge ou de fonderie, ou à partir d'une ébauche obtenue par métallurgie des poudres ou par fabrication additive ; et/ou
- le formage direct, par métallurgie des poudres, fonderie, ou fabrication additive.

Cette étape s'avère particulièrement efficace pour réaliser la partie diffusante des canaux de retour en donnant à celles-ci une géométrie précise et présentant de bonnes performances hydro-dynamiques.

Le procédé comporte en outre une étape distincte de la précédente, dans laquelle on forme les parties coudées des canaux de retour.

Dans certaines variantes de ce procédé de fabrication, les canaux de retour peuvent comprendre des tubes. Ces tubes peuvent être réalisés par hydroformage, métallurgie des poudres, mécano-soudage, fonderie, fabrication additive, ou même cintrage, notamment si les axes du canal de retour à l'entrée et à la sortie du tube sont dans le même plan.

La jonction entre les différentes pièces adjacentes dans lesquelles sont formés les canaux (c'est-à-dire les pièces disposées successivement sur le trajet du flux de fluide passant dans les canaux) peut être réalisée par brasage, soudage, ou équivalent. Il peut s'agir par exemple de la jonction entre la partie diffusante des canaux et les tubes contenant la partie coudée des canaux.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1A est une vue de détail en coupe d'un canal de retour d'un dispositif de transfert de fluide constituant un premier mode de réalisation de l'invention ;
- les figures 1B, 1C, 1D et 1E sont des vues de détail en coupe de quatre variantes d'un canal de retour de dispositifs de transfert de fluide constituant un deuxième, un troisième, un quatrième et un cinquième mode de réalisation de l'invention ;
- la figure 2 est une vue en demi-coupe axiale d'un exemple de turbopompe centrifuge de forte puissance multiétages équipée d'un dispositif de transfert de fluide conforme à l'invention, et comprenant les canaux de retour illustrés par la figure 1A ;
- la figure 3 est une vue en coupe transverse d'un dispositif de transfert dans un sixième mode de réalisation de l'invention.

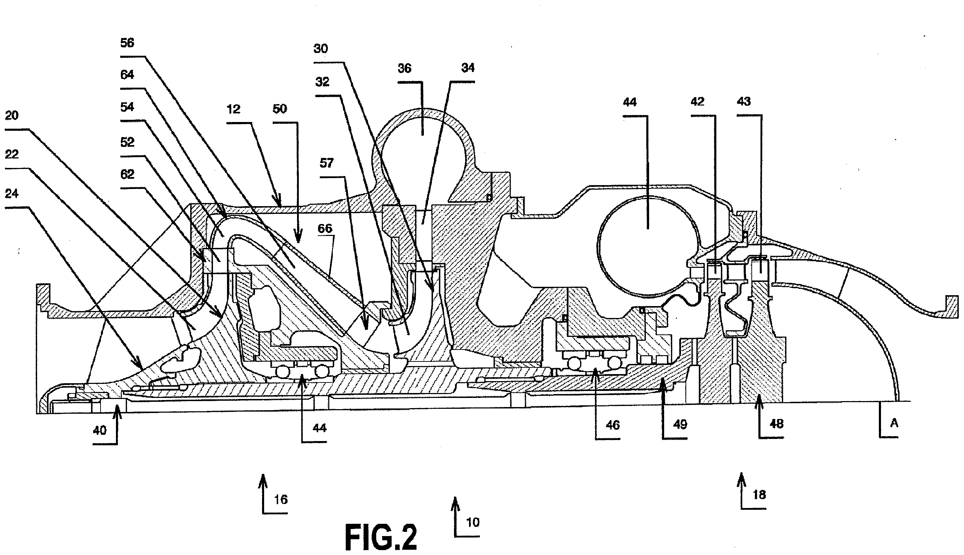

La figure 2 représente une turbopompe 10 multiétages voisine de certaines turbopompes équipant les moteurs-fusées cryotechniques désignés par la dénomination Vulcain (marque déposée) et servant à l'alimentation de ces moteurs en hydrogène liquide à haute pression.

La turbopompe 10 comprend une pompe centrifuge 16 à deux étages, et une turbine 18 qui entraîne en rotation le rotor de la pompe 16 autour d'un axe A.

La pompe 16 constitue un dispositif de transfert de fluide au sens de l'invention.

A l'intérieur d'un carter 12, le rotor de la pompe 16 comprend une première roue centrifuge 20 munie d'aubes 22, une deuxième roue centrifuge 30 munie d'aubes 32, un inducteur 24 et une pièce de liaison 49.

L'inducteur 24, qui confère de bonnes caractéristiques d'aspiration et autorise une vitesse de rotation élevée, est placé à l'entrée de la pompe 16 en aval du conduit d'admission de la pompe 16 (non représenté) en fluide de travail. La pièce de liaison 49 assure la solidarisation en rotation de la roue 30 avec le rotor de la turbine 18.

L'empilage et le serrage axial de l'inducteur 24, des roues 20 et 30, et de la pièce de liaison 49 sont assurés par un tirant ou arbre central 40 de la pompe 16.

Le stator de la pompe 16 comprend le carter 12 et, à l'intérieur de celui-ci, un ensemble de canaux de retour de fluide 50. Ceux-ci captent et ralentissent le fluide refoulé par la roue 20 et le dirigent vers l'entrée de la roue 30. Le nombre de canaux de retour peut varier selon les machines, et est généralement compris entre 7 et 17.

Dans la pompe 16, le fluide de travail est aspiré au niveau de l'inducteur 24 ; il est entraîné et comprimé par la première roue à aubes 20 ; il est collecté en sortie de la roue 20 par les canaux de retour de fluide 50. Le fluide de travail est alors entraîné et comprimé à nouveau par la deuxième roue à aubes 30.

Le fluide ainsi comprimé est alors collecté en sortie de la roue 30 par un diffuseur 34, qui ralentit le fluide avant d'alimenter le conduit torique de refoulement 36.

La turbine 18 est disposée à l'arrière de la deuxième roue 30 de la pompe 16 (c'est-à-dire sur la partie droite de la figure 2).

Elle comprend un tore d'admission 44 et un rotor comprenant principalement deux éléments de turbine aubés 42 et 43.

Lorsque la turbopompe 10 est en fonctionnement, un flux de gaz à pression élevée pénètre dans la turbine 18 via le tore 44 et passe successivement à travers les éléments de turbine 42 et 43, qu'il entraîne en rotation. Sous l'effet de la pression exercée par le fluide sur les éléments de turbine 42 et 43 lors de son passage dans la turbine 18, ces éléments entraînent en rotation les roues 20 et 30 ainsi que l'inducteur 24, via la pièce de liaison 49.

Par suite, au sein de la turbopompe 10, la portion de turbine 18 actionne la pompe 16.

Les principales parties tournantes de la machine, à savoir l'inducteur 24, la roue 20, la roue 30, le tirant 40 et les éléments 42 et 43 de la turbine, sont guidées en rotation par des paliers à roulement 44 et 46. Par rapport à l'axe A de la turbopompe, le palier à roulement 44 est monté entre la roue 20 et la roue 30, et le palier à roulement 46 est monté en aval de la roue 30 au niveau de la pièce de liaison 49.

A l'intérieur de la pompe 16, comme indiqué auparavant, la référence 50 désigne les différents canaux de retour qui s'étendent de la sortie de la première roue 20 à l'entrée de la deuxième roue 30.

Ces canaux de retour sont axisymétriques, c'est-à-dire que chacun d'eux peut être obtenu à partir du canal adjacent par une simple rotation autour de l'axe A d'un angle dépendant du nombre total de canaux. Si par exemple le nombre total de canaux est de douze, une rotation de 30° d'un canal autour de l'axe A permettra d'obtenir le canal adjacent.

Chacun des canaux de retour 50 présente quatre parties, à savoir une partie diffusante 52, une partie coudée 54, une partie de retour 56 et une partie de sortie 57.

Les parties diffusantes 52 sont aménagées au sein d'une pièce non-tubulaire 62, appelée moyeu, qui assure l'intégrité structurale du dispositif et sa résistance mécanique. Cette pièce 62 constitue la deuxième pièce non-tubulaire au sens de l'invention et cela, conjointement pour l'ensemble des canaux 50. En effet, la pièce 62 est formée de manière intégrale ou monobloc, et s'étend sur 360° autour de l'axe A de la turbopompe.

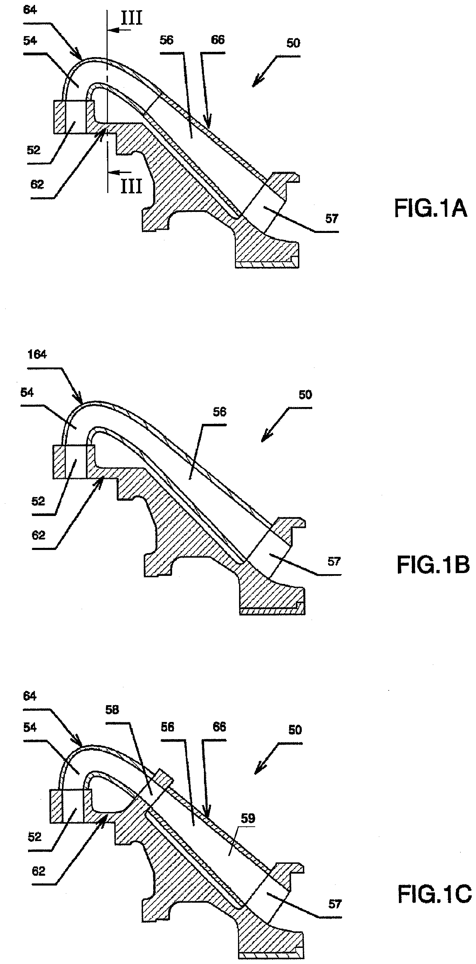

Dans une coupe passant par l'axe de rotation A du dispositif (Fig. 1A), les parties diffusantes 52 s'étendent suivant une direction radiale.

Les parties de sortie 57 des canaux sont également aménagées au sein même de la pièce 62, ce qui limite le nombre de pièces de la turbomachine. La pièce 62 constitue donc non seulement la deuxième, mais également la première pièce non-tubulaire au sens de l'invention, et cela pour l'ensemble des canaux 50.

Contrairement aux parties diffusantes et de sortie, les parties coudée 54 et de retour 56 des conduits de retour 50 sont formées par des pièces tubulaires, distinctes du moyeu 62.

Chacune des parties coudées 54 est formée à l'intérieur d'une pièce tubulaire indépendante 64. De la même façon, chacune des parties de retour 56 est formée à l'intérieur d'une pièce tubulaire indépendante 66.

Il s'ensuit que le nombre de pièces tubulaires 64, de même que le nombre de pièces tubulaires 66, est égal au nombre total de canaux intégrés au dispositif 50. Dans un mode de réalisation voisin, les pièces 64 et/ou les pièces 66 peuvent être réunies pour former une pièce unique, s'étendant sur 360° autour de l'axe A.

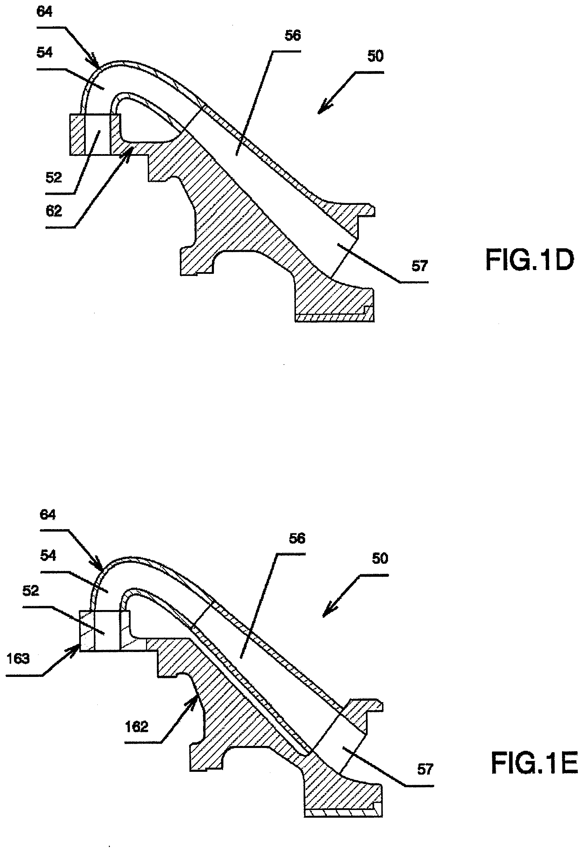

Les figures 1B, 1C, 1D et 1E présentent quatre autres modes de réalisation de l'invention. Ceux-ci sont identiques au premier mode de réalisation de l'invention, hormis certaines différences qui sont précisées ci-dessous. Ces différences résident dans la manière dont les différentes parties des canaux de retour 50 sont réalisées.

Dans ces modes de réalisation, les pièces identiques ou similaires au premier mode de réalisation comportent la même référence numérique.

Dans le deuxième mode de réalisation de l'invention (Fig.1B), la partie coudée 54 et la partie de retour 56, au lieu d'être formées dans deux pièces distinctes (tubes 64 et 66) comme sur la figure 1A, sont formées dans une unique pièce tubulaire 164. Cette variante permet de s'affranchir d'éventuelles problématiques au niveau de la liaison des pièces tubulaires 64 et 66 telle que présentée sur la figure 1A. En revanche, elle peut conduire à une plus grande difficulté de réalisation de la pièce 164 en comparaison des pièces 64 et 66 réalisées séparément.

Dans le troisième mode de réalisation (Fig.1C), une portion 58 de la partie de retour 56 des différents canaux est formée dans une pièce non-tubulaire (qui constitue une « quatrième pièce non-tubulaire » au sens précédemment défini), disposée entre deux pièces ou portions tubulaires.

Cette quatrième pièce non-tubulaire est constituée par la pièce 62 dans laquelle sont formées en outre, pour chacun des canaux, la partie diffusante 52 et la partie de sortie 57.

La partie de retour 56 est donc formée de deux portions :
- une portion amont 58 formée dans la pièce 62, raccordée en amont à l'orifice de sortie de la partie coudée 54 formée dans un tube 64 ;
- une portion aval 59, formée dans un tube 66, raccordé en amont à l'orifice de sortie de la portion amont 58.

L'intérêt de cette variante est de répondre à des problèmes éventuels au niveau de la liaison entre les pièces tubulaires 64 et 66 présentées sur la figure 1A.

Dans le quatrième mode de réalisation (Fig.1D), la partie de retour 56 est constituée par une troisième pièce non-tubulaire, au sens défini précédemment. Elle est formée comme la partie diffusante 52 et la partie de sortie 57 dans la pièce 62. Dans ce cas, la partie de retour 56 est formée de manière intégrale (ou monobloc) avec la partie de sortie 57, au sein de la pièce 62. Si cette variante peut conduire à une réalisation éventuellement plus complexe de la partie de retour et de la partie de sortie (par exemple par usinage ou par électro-érosion), elle permet inversement de s'affranchir ou du moins de limiter les éventuels problèmes de liaison entre les pièces tubulaires 64 et 66 présentées sur la figure 1A.

Pour tous les modes de réalisation décrits précédemment, il est possible dans un mode de réalisation voisin que la première pièce non-tubulaire, dans laquelle est formée la partie de sortie, et la deuxième pièce tubulaire, dans laquelle est formée la partie diffusante, soient réalisées dans des pièces distinctes, tout en étant solidaires l'une de l'autre. La pièce 62 présentée sur les figures 1A à 1D est alors remplacée par au moins deux pièces.

Le cinquième mode de réalisation (Fig.1E) illustre cette possibilité. Dans ce mode de réalisation, la première partie tubulaire est formée par une première pièce non-tubulaire 162. La deuxième partie tubulaire est formée par une deuxième pièce non-tubulaire 163, fixée rigidement à la pièce 162 par des moyens non représentés, par exemple par soudage.

Pour tous les modes de réalisation décrits précédemment, les tubes 64, 66 et 164 sont des tubes à parois minces.

Enfin, la figure 3 présente un sixième mode de réalisation, présentant un agencement possible notamment pour les pièces non-tubulaires.

Cet agencement est présenté dans le cas de la deuxième pièce non-tubulaire, mais peut être appliqué également à une ou plusieurs pièces parmi la première, la troisième et la quatrième pièce non-tubulaire.

Le sixième mode de réalisation est identique au premier mode de réalisation (Fig.1A) hormis la différence suivante.

Dans le premier mode de réalisation, la pièce 62 s'étend sur 360° autour de l'axe A ; les parties diffusantes (et de sortie) de tous les canaux sont formées dans la pièce 62.

Cependant, la pièce 62 peut être dissociée en plusieurs portions distinctes, disposées de manière axisymétrique autour de l'axe A : par exemple quatre portions, chacune occupant un secteur angulaire de 90° autour de cet axe.

Ce mode de réalisation est illustré par la figure 3. Celle-ci représente une coupe transverse du dispositif de transfert perpendiculairement à l'axe A, au niveau axial de la partie coudée 54.

Dans ce mode de réalisation, le dispositif comporte quatre pièces distinctes, ayant toutes la même forme, 62A, 62B, 62C et 62D. Ces pièces sont assemblées autour de l'axe A, chacune occupant un quadrant, de manière à former un corps axisymétrique.

Ce corps axisymétrique a la même forme et la même fonction que la pièce 62 représentée sur la figure 1A mais est formé par quatre pièces 62A,62B,62C,62D au lieu d'être formé par une pièce unique ; il porte la même référence 62 que la pièce 62.

## Revendications

1. Dispositif (16) de transfert de fluide comprenant un rotor comportant au moins une première et une deuxième roue centrifuge (20, 30), et un stator incorporant une pluralité de canaux de retour (50) ;
dispositif dans lequel les canaux de retour (50) sont axisymétriques, et chaque canal de retour comporte successivement, en suivant la trajectoire du fluide à partir de la première roue :
- une partie diffusante (52) apte à guider le flux de fluide dans une direction d'écoulement centrifuge, puis
- une partie coudée (54) apte à rediriger le flux de fluide dans une direction d'écoulement centripète, puis
- une partie de retour (56) apte à guider le fluide suivant une trajectoire centripète, puis
- une partie de sortie (57) formée dans une première pièce non-tubulaire (62,162), et apte à guider le fluide vers l'entrée de la deuxième roue centrifuge ;
le dispositif **se caractérisant en ce que** chacun desdits canaux de retour est apte à collecter une partie d'un flux de fluide sortant de la première roue (20) et à diriger cette partie de flux jusqu'à une entrée de la deuxième roue (30) sans échanger du fluide avec au moins un autre desdits canaux de retour ; et **en ce que** pour chacun desdits canaux :
la partie diffusante (52) et la partie coudée (54) sont formées dans des pièces distinctes, et
la partie diffusante est formée dans une deuxième pièce non-tubulaire (62,163) solidaire de la première pièce non-tubulaire.

2. Dispositif selon la revendication 1, dans lequel, pour chacun desdits canaux, la partie coudée (54) et/ou la partie de retour (56) est ou sont formée(s) dans un ou plusieurs tubes.

3. Dispositif selon la revendication 2, dans lequel, pour chacun desdits canaux, la partie coudée (54) et la partie de retour (56) sont formées dans une seule et même pièce tubulaire.

4. Dispositif selon la revendication 1, dans lequel pour chacun desdits canaux, la partie de retour est formée dans une troisième pièce non-tubulaire (62).

5. Dispositif selon la revendication 4, dans lequel pour chacun desdits canaux, la troisième pièce non-tubulaire (62) et ladite première pièce non-tubulaire sont formées dans une seule et même pièce non-tubulaire.

6. Dispositif selon la revendication 4 ou 5, dans lequel une réunion desdites troisièmes pièces non-tubulaires constitue un ensemble d'une ou plusieurs pièces non-tubulaires formant un corps axisymétrique s'étendant sur 360° autour d'un axe (A) du dispositif.

7. Dispositif selon l'une quelconque des revendications 1 à 6, dans lequel chacun desdits canaux comporte deux portions tubulaires (54,59) formées dans des pièces tubulaires (64,66), et une quatrième pièce non-tubulaire (62) est interposée entre lesdites portions tubulaires.

8. Dispositif selon la revendication 7, dans lequel pour chacun desdits canaux, la quatrième pièce non-tubulaire (62) et ladite première pièce non-tubulaire sont formées dans une seule et même pièce non-tubulaire.

9. Dispositif selon la revendication 7 ou 8, dans lequel une réunion desdites quatrièmes pièces non-tubulaires constitue un ensemble d'une ou plusieurs pièces non-tubulaires formant un corps axisymétrique s'étendant sur 360° autour d'un axe (A) du dispositif.

10. Dispositif selon l'une quelconque des revendications 1 à 9, dans lequel une réunion desdites premières pièces non-tubulaires (62A,62B,62C,62D) et/ou une réunion desdites deuxièmes pièces non-tubulaires constitue un ensemble d'une ou plusieurs pièces non-tubulaires formant un corps axisymétrique (62) s'étendant sur 360° autour d'un axe (A) du dispositif.

11. Turbomachine (10) comportant au moins un dispositif selon l'une quelconque des revendications 1 à 10.

12. Procédé de fabrication d'un dispositif de transfert de fluide selon l'une quelconque des revendications 1 à 10, dans lequel on forme lesdites parties diffusantes (52) par l'une quelconque des technologies suivantes :
- l'usinage ;
- l'électro-érosion, à partir d'une ébauche de forge ou de fonderie, ou à partir d'une ébauche obtenue par métallurgie des poudres ou par fabrication additive ; et/ou
- le formage direct, par métallurgie des poudres, fonderie, ou fabrication additive.

## Patentansprüche

1. Fluidtransfervorrichtung (16), umfassend einen Rotor mit zumindest einem ersten und einem zweiten Schleuderrad (20, 30) und einen Stator mit mehreren Rückführkanälen (50), wobei in der Vorrichtung
die Rückführkanäle (50) axisymmetrisch sind und jeder Rückführkanal aufeinanderfolgend, gemäß der Fluidbahn aus dem ersten Rad umfasst:
- einen Diffusionsteil (52), der geeignet ist, den Fluidstrom in einer Schleuderströmungsrichtung zu führen, dann
- einen gebogenen Teil (54), der geeignet ist, den Fluidstrom in einer zentripetalen Strömungsrichtung umzuleiten, dann
- einen Rückführteil (56), der geeignet ist, das Fluid gemäß einer zentripetalen Bahn zu führen,
- einen Ausgangsteil (57), der in einem ersten nicht-rohrförmigen Stück (62, 162) gebildet und geeignet ist, das Fluid zum Eingang des zweiten Schleuderrads zu führen,
wobei die Vorrichtung **dadurch gekennzeichnet ist, dass** jeder der Rückführkanäle geeignet ist, einen Teil eines Fluidstroms zu sammeln, der aus dem ersten Rad (20) austritt, und diesen Teil des Stroms bis zu einem Eingang des zweiten Rads (30) zu richten, ohne Fluid mit mindestens einem anderen der Rückführkanäle auszutauschen, und dadurch, dass für jeden der Kanäle:
der Diffusionsteil (52) und der gebogene Teil (54) in getrennten Stücken gebildet sind, und
der Diffusionsteil in einem zweiten nicht-rohrförmigen Stück (62, 163) einteilig mit dem ersten nicht-rohrförmigen Stück gebildet ist.

2. Vorrichtung nach Anspruch 1, wobei, für jeden der Kanäle, der gebogene Teil (54) und/oder der Rückführteil (56) aus einem oder mehreren Rohren gebildet ist oder sind.

3. Vorrichtung nach Anspruch 2, wobei, für jeden der Kanäle, der gebogene Teil (54) und der Rückführteil (56) in ein und demselben rohrförmigen Stück gebildet sind.

4. Vorrichtung nach Anspruch 1, wobei, für jeden der Kanäle, der Rückführteil in einem dritten nicht-rohrförmigen Stück (62) gebildet ist.

5. Vorrichtung nach Anspruch 4, wobei, für jeden der Kanäle, das dritte nicht-rohrförmige Stück (62) und das erste nicht-rohrförmige Stück in ein und demselben nicht-rohrförmigen Stück gebildet sind.

6. Vorrichtung nach Anspruch 4 oder 5, wobei eine Vereinigung der dritten nicht-rohrförmigen Stücke eine Einheit eines oder mehrerer nicht-rohrförmiger Stücke darstellt, die einen axisymmetrischen Körper bilden, der sich über 360° rund um die Achse (A) der Vorrichtung erstreckt.

7. Vorrichtung nach einem der Ansprüche 1 bis 6, wobei jeder der Kanäle zwei rohrförmige Abschnitte (54, 59) umfasst, die in den rohrförmigen Stücken (64, 66) gebildet sind, und ein viertes nicht-rohrförmiges Stück (62) zwischen den rohrförmigen Stücken angeordnet ist.

8. Vorrichtung nach Anspruch 7, wobei, für jeden der Kanäle, das vierte nicht-rohrförmige Stück (62) und das erste nicht-rohrförmige Stück in ein und demselben nicht-rohrförmigen Stück gebildet sind.

9. Vorrichtung nach Anspruch 7 oder 8, wobei eine Vereinigung der vierten nicht-rohrförmigen Stücke eine Einheit eines oder mehrerer nicht-rohrförmiger Stücke darstellt, die einen axisymmetrischen Körper bilden, der sich über 360° rund um die Achse (A) der Vorrichtung erstreckt.

10. Vorrichtung nach einem der Ansprüche 1 bis 9, wobei eine Vereinigung der ersten nicht-rohrförmigen Stücke (62A, 62B, 62C, 62D) und/oder eine Vereinigung der zweiten nicht-rohrförmigen Stücke eine Einheit eines oder mehrerer nicht-rohrförmiger Stücke darstellt oder darstellen, die einen axisymmetrischen Körper (62) bilden, der sich über 360° rund um die Achse (A) der Vorrichtung erstreckt.

11. Turbomaschine (10), umfassend mindestens eine Vorrichtung nach einem der Ansprüche 1 bis 10.

12. Verfahren zur Herstellung einer Fluidtransfervorrichtung nach einem der Ansprüche 1 bis 10, wobei die Diffusionstelle (52) durch eine der folgenden Techniken gebildet werden:
- Bearbeiten,
- Elektroerosion aus einem Schmiede- oder Gießrohling oder aus einem Rohling, der durch Pulvermetallurgie oder durch additive Fertigung erhalten wird, und/oder
- direktes Formen, durch Pulvermetallurgie, Gießen oder additive Fertigung.

## Claims

1. A fluid transfer device (16) comprising a rotor having at least a first centrifugal wheel (20) and a second centrifugal wheel (30), and a stator incorporating a plurality of return channels (50);
• in which device the return channels (50) are axisymmetric, and each return channel includes in succession along the fluid flow path from the first wheel:
• a diffusing portion (52) suitable for guiding the fluid stream in a centrifugal flow direction; then
• a bend portion (54) suitable for redirecting the fluid stream in a centripetal flow direction; then
• a return portion (56) suitable for guiding the fluid along a centripetal path; and then
• an outlet portion (57) formed in a first non-tubular part (62, 162), and suitable for guiding the fluid towards the inlet of the second centrifugal wheel;
the device being **characterized in that** each of said return channels is suitable for collecting a portion of a fluid stream leaving the first wheel (20) and for directing this stream portion to an inlet of the second wheel (30) without exchanging the fluid with any other one of said return channels; and **in that** for each of said channels:
• the diffusing portion (52) and the bend portion (54) are formed in distinct parts; and
• the diffusing portion is formed in a second non-tubular part (62, 163) secured to the first non-tubular part.

2. A device according to claim 1, wherein for each of said channels, the bend portion (54) and/or the return portion (56) is/are formed in one or more tubes.

3. A device according to claim 2, wherein for each of said channels, the bend portion (54) and the return portion (56) are formed in a single tubular part.

4. A device according to claim 1, wherein for each of said channels, the return portion is formed in a third non-tubular part (62).

5. A device according to claim 4, wherein for each of said channels, the third non-tubular part (62) and said first non-tubular part are formed in a single non-tubular part.

6. A device according to claim 4 or claim 5, wherein a union of said third non-tubular parts constitutes an assembly of one or more non-tubular parts forming an axisymmetric body extending over 360° around an axis (A) of the device.

7. A device according to any one of claims 1 to 6, wherein each of said channels has two tubular fractions (54, 59) formed in tubular parts (64, 66), and a fourth non-tubular part (62) is interposed between said tubular fractions.

8. A device according to claim 7, wherein for each of said channels, the fourth non-tubular part (62) and said first non-tubular part are formed in a single non-tubular part.

9. A device according to claim 7 or claim 8, wherein a union of said fourth non-tubular parts constitutes an assembly of one or more non-tubular parts forming an axisymmetric body extending over 360° around an axis (A) of the device.

10. A device according to any one of claims 1 to 9, wherein a union of said first non-tubular parts (62A, 62B, 62C, 62D) and/or a union of said second non-tubular parts constitutes an assembly of one or more non-tubular parts forming an axisymmetric body (62) extending over 360° around an axis (A) of the device.

11. A turbomachine (10) including at least one device according to any one of claims 1 to 10.

12. A method of fabricating a fluid transfer device according to any one of claims 1 to 10, wherein said diffusing portions (52) are formed by any one of the following technologies:
• machining;
• electro-erosion of a forged or cast blank, or of a blank obtained by powder metallurgy or by additive fabrication; and/or
• direct forming using powder metallurgy, casting, or additive fabrication.
